# EUROPEAN PATENT APPLICATION

(11) **EP 4 243 153 A1**
(43) Date of publication of application: **13.09.2023**
(21) Application number: 21889514.2
(22) Date of filing: 02.11.2021
(51) Int. Cl.: H01M 10/0585, H01M 10/052, H01M 10/0562, H01M 10/0565, H01M 50/116

(54) **ALL-SOLID-STATE BATTERY INCLUDING POSITIVE ELECTRODE HAVING WIDER AREA THAN NEGATIVE ELECTRODE, AND MANUFACTURING METHOD THEREFOR**

(30) Priority: 04.11.2020 KR 20200145876
(71) Applicant: LG Energy Solution, Ltd., Seoul 07335 (KR)
(72) Inventor: LEE, Jung Pil, Daejeon 34122 (KR); JUNG, Hye Ri, Daejeon 34122 (KR); HAN, Hyea Eun, Daejeon 34122 (KR); CHO, Sung Ju, Daejeon 34122 (KR)
(74) Representative: Goddar, Heinz J.
(86) International application number: PCT/KR2021/015684
(87) International publication number: WO 2022/098049

(57) **Abstract**

The present invention relates to an all-solid-state battery including an electrode assembly including a positive electrode, a negative electrode, and a solid electrolyte layer disposed between the positive electrode and the negative electrode and a battery case configured to receive the electrode assembly, wherein the thickness of the positive electrode is greater than the thickness of the negative electrode, and when the electrode assembly is pressed, the area of the electrode that directly faces a pressing portion is less than the area of the electrode that does not directly face the pressing portion, and a method of manufacturing the same.

## Description

### [Technical Field]

This application claims the benefit of priority to Korean Patent Application No. 2020-0145876 filed on November 4, 2020, the disclosure of which is incorporated herein by reference in its entirety.

The present invention relates to an all-solid-state battery including a positive electrode having a larger area than a negative electrode and a method of manufacturing the same. More particularly, the present invention relates to an all-solid-state battery configured such that the thickness of a positive electrode is greater than the thickness of a negative electrode, and when an electrode assembly including the positive electrode, the negative electrode, and a solid electrolyte layer disposed between the positive electrode and the negative electrode is pressed, the area of the electrode that directly faces a pressing portion is less than the area of the electrode located at the surface opposite thereto, and a method of manufacturing the same.

### [Background Art]

A lithium secondary battery, which has high energy density, a low self-discharge rate, and a long lifespan, is used for various high-capacity batteries. The lithium secondary battery has a problem in that a separator interposed between a positive electrode and a negative electrode is damaged or the volume of the battery is increased by lithium dendrites generated at the time of charging and discharging.

In order to solve a safety-related problem caused by leakage of a liquid electrolyte or overheating, an all-solid-state battery is presented as an alternative. Unlike the lithium secondary battery, the all-solid-state battery has a solid electrolyte layer including a solid electrolyte, and the solid electrolyte layer is disposed between the positive electrode and the negative electrode so as to serve as a separator.

Since the all-solid-state battery uses a solid electrolyte instead of a liquid electrolytic solution used in a conventional battery, evaporation of the electrolytic solution due to a change in temperature or leakage of the electrolytic solution due to external impact does not occur, whereby the all-solid-state battery is safe from explosion or fire. The region of the solid electrolyte that contacts the positive electrode or the negative electrode is limited due to characteristics of a solid, whereby formation of an interface between the positive electrode and the solid electrolyte layer and between the negative electrode and the solid electrolyte layer is not easy.

In the case in which the area of contact between the positive electrode and the solid electrolyte layer and between the negative electrode and the solid electrolyte layer is small, electrical resistance is high and output is reduced, whereby interfacial resistance is reduced by pressing a unit cell including the solid electrolyte.

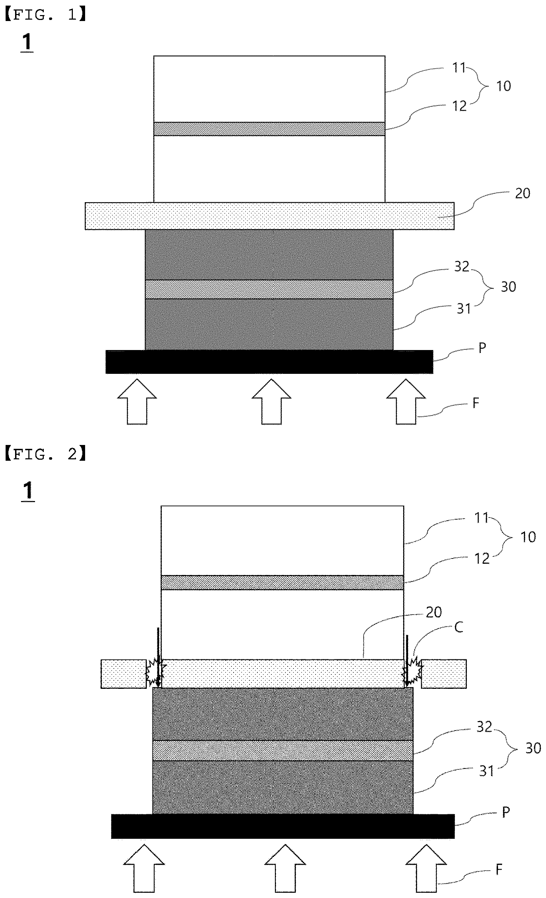

FIG. 1 is a side view of a conventional all-solid-state battery 1 before pressing, and FIG. 2 is a side view of the conventional all-solid-state battery 1 after pressing.

As shown in FIGS. 1 and 2, the conventional all-solid-state battery 1 is formed by pressing an electrode assembly configured such that a positive electrode 10 including a positive electrode active material layer 11 and a positive electrode current collector 12, a solid electrolyte layer 20, and a negative electrode 30 including a negative electrode active material layer 31 and a negative electrode current collector 32 are stacked.

In order to prevent distortion of the positive electrode 10, the solid electrolyte layer 20, and the negative electrode 30 of the electrode assembly, the electrode assembly is pressed in the state in which a pressing plate P is disposed at one surface of the electrode assembly.

The pressing plate P is disposed at one surface of the electrode assembly, and pressing force F from the pressing plate P is applied in a direction toward the electrode assembly to reduce interfacial resistance between the positive electrode 10, the solid electrolyte layer 20, and the negative electrode 30.

Pressing using the pressing plate P may be performed after the electrode assembly is received in a battery case and the battery case is hermetically sealed. Although the electrode assembly may be pressed even in a state of not being received in the battery case, there is a risk of the electrode assembly shaking when the electrode assembly is received in the battery case. In the case in which a sulfide-based solid electrolyte is used for the solid electrolyte layer 20, it is preferable for the electrode assembly to be pressed after hermetic sealing of the battery case in order to prevent contact between the sulfide-based solid electrolyte and moisture.

Conventionally, the loading amount of an electrode active material of the all-solid-state battery 1 is not large, and therefore, when the all-solid-state battery 1 is pressed after being received in the battery case, damage to the battery case or damage to the electrode assembly is not great. In recent years, however, the loading amount of the electrode active material has been increased in order to develop high-capacity, high-density all-solid-state batteries, whereby the thickness of the positive electrode 10 and/or the negative electrode 30 has gradually increased, and therefore the step between the positive electrode 10, the solid electrolyte layer 20, and the negative electrode 30 has been gradually enlarged. As the step is enlarged, the solid electrolyte layer 20 is damaged, whereby a damaged portion C is formed, as shown in FIG. 2.

Even the portion of the solid electrolyte layer 20, in which the damaged portion C is formed, between the positive electrode 10 and the negative electrode 30 that is necessary to prevent short circuit between the positive electrode 10 and the negative electrode 30 may be damaged. Due to the damaged portion C, short circuit may occur in the all-solid-state battery 1, whereby charging and discharging of the all-solid-state battery may not be possible. In severe cases, ignition or explosion of the all-solid-state battery may occur during driving thereof.

Furthermore, in recent years, the thickness of the solid electrolyte layer has been gradually reduced in order to improve density and performance of the all-solid-state battery, and therefore a possibility of damage to the solid electrolyte layer has further increased.

In Patent Document 1, the width of an electrode is changed in order to prevent collapse of an outer edge portion of an electrode layer or to prevent the electrode layer from tearing a solid electrolyte layer during pressing, and an electrode having a non-uniform shape, in which the outer edge portion of the electrode layer is thicker than a central portion of the electrode layer, is pressed in order to increase utilization of the electrode layer; however, uniform pressing of a high-capacity, high-density all-solid-state battery in order to prevent distortion of an electrode is not considered.

Therefore, there is a need to improve safety of an all-solid-state battery while improving performance and density thereof.

Japanese Registered Patent Publication No. 5929748 (2016.05.13) ("Patent Document 1")

### [Disclosure]

### [Technical Problem]

The present invention has been made in view of the above problems, and it is an object of the present invention to prevent short circuit between a positive electrode and a negative electrode of an all-solid-state battery while uniformly pressing an electrode assembly.

It is another object of the present invention to allow only a specific electrode to absorb pressure applied to the all-solid-state battery, thereby preventing distortion of the electrode and damage to the electrode and a solid electrolyte layer due to pressing.

It is a further object of the present invention to prevent damage to an all-solid-state battery using an electrode having a large thickness, whereby it is possible to safely use a high-capacity, high-density all-solid-state battery.

### [Technical Solution]

In order to accomplish the above objects, an all-solid-state battery according to the present invention includes an electrode assembly including a positive electrode, a negative electrode, and a solid electrolyte layer disposed between the positive electrode and the negative electrode; and a battery case configured to receive the electrode assembly, wherein the thickness of the positive electrode is greater than the thickness of the negative electrode, and when the electrode assembly is pressed, the area of the electrode that directly faces a pressing portion is less than the area of the electrode that does not directly face the pressing portion.

At this time, the electrode assembly may be pressed using a method of disposing a pressing plate at one surface of the electrode assembly and pushing the pressing plate.

The electrode that directly faces the pressing portion may be the negative electrode, and the electrode that does not directly face the pressing portion may be the positive electrode.

The positive electrode may have higher strength than the negative electrode.

The strength means the limit of force at which an object is not permanently deformed or broken by load per unit area applied to the object.

The area of the solid electrolyte layer may be equal to or greater than the area of an electrode having the largest area.

The thickness of the solid electrolyte layer may be less than the thickness of the electrode that does not directly face the pressing portion.

At this time, the thickness of the positive electrode may be two to five times thicker than the thickness of the negative electrode.

The battery case may be a pouch-shaped secondary battery case.

The all-solid-state battery may be a lithium plating/stripping all-solid-state battery.

The present invention provides a method of manufacturing the all-solid-state battery described above, the method including S1) stacking a positive electrode, a solid electrolyte layer, and a negative electrode to form an electrode assembly and S2) pressing the electrode assembly in a direction from one of the positive and negative electrodes having a smaller area than the other to said the other having a larger area.

Pores in the solid electrolyte layer may be removed in step S2) or may be removed before step S1).

Step S2) may be performed after the electrode assembly is received in a battery case.

Step S2) may be performed after the electrode assembly is received in the battery case and the battery case is vacuum sealed.

The present invention provides a battery module or a battery pack including the all-solid-state battery. In addition, the present invention provides a device in which the all-solid-state battery is mounted.

In the present invention, one or more constructions that do not conflict with each other may be selected and combined from among the above constructions.

### [Advantageous Effects]

As is apparent from the above description, an all-solid-state battery according to the present invention is configured such that, when an electrode assembly is formed, short circuit between a positive electrode and a negative electrode is reduced while the electrode assembly is uniformly pressed, whereby initial production yield of the all-solid-state battery is increased and safety of the all-solid-state battery during driving thereof is improved.

In addition, a thick positive electrode active material layer is provided, whereby the capacity of the battery is increased, and the strength of the positive electrode is also high, whereby distortion of or damage to the electrode assembly is prevented.

In addition, even though a relatively thin solid electrolyte layer is used, short circuit does not occur in the all-solid-state battery through a damaged portion of the solid electrolyte layer during pressing, whereby it is possible to obtain an all-solid-state battery having improved safety and performance.

### [Description of Drawings]

FIG. 1 is a side view of a conventional all-solid-state battery before pressing.
FIG. 2 is a side view of the conventional all-solid-state battery after pressing.
FIG. 3 is a side view of an all-solid-state battery according to a first type of the present invention before pressing.
FIG. 4 is a side view of the all-solid-state battery according to the first type of the present invention after pressing.
FIG. 5 is a side view of an all-solid-state battery according to a second type of the present invention before pressing.
FIG. 6 is a side view of the all-solid-state battery according to the second type of the present invention after pressing.
FIG. 7 is a photograph of Comparative Example 3 before CIP pressing.
FIG. 8 is a photograph of an electrode assembly of Comparative Example 3 after CIP pressing.
FIG. 9 is a photograph of an outer edge of a damaged solid electrolyte layer of Comparative Example 3 after CIP pressing.
FIG. 10 is a photograph of a surface of a positive electrode of Comparative Example 3 after CIP pressing.
FIG. 11 is a photograph of a surface of a residual solid electrolyte layer after damage of Comparative Example 3 after CIP pressing.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

In addition, a description to embody elements through limitation or addition may be applied to all inventions, unless particularly restricted, and does not limit a specific invention.

Also, in the description of the invention and the claims of the present application, singular forms are intended to include plural forms unless mentioned otherwise.

Also, in the description of the invention and the claims of the present application, "or" includes "and" unless mentioned otherwise. Therefore, "including A or B" means three cases, namely, the case including A, the case including B, and the case including A and B.

In addition, all numeric ranges include the lowest value, the highest value, and all intermediate values therebetween unless the context clearly indicates otherwise.

An all-solid-state battery according to the present invention includes an electrode assembly including a positive electrode, a negative electrode, and a solid electrolyte layer disposed between the positive electrode and the negative electrode; and a battery case configured to receive the electrode assembly, wherein the thickness of the positive electrode is greater than the thickness of the negative electrode, and when the electrode assembly is pressed, the area of the electrode that directly faces a pressing portion is less than the area of the electrode that does not directly face the pressing portion.

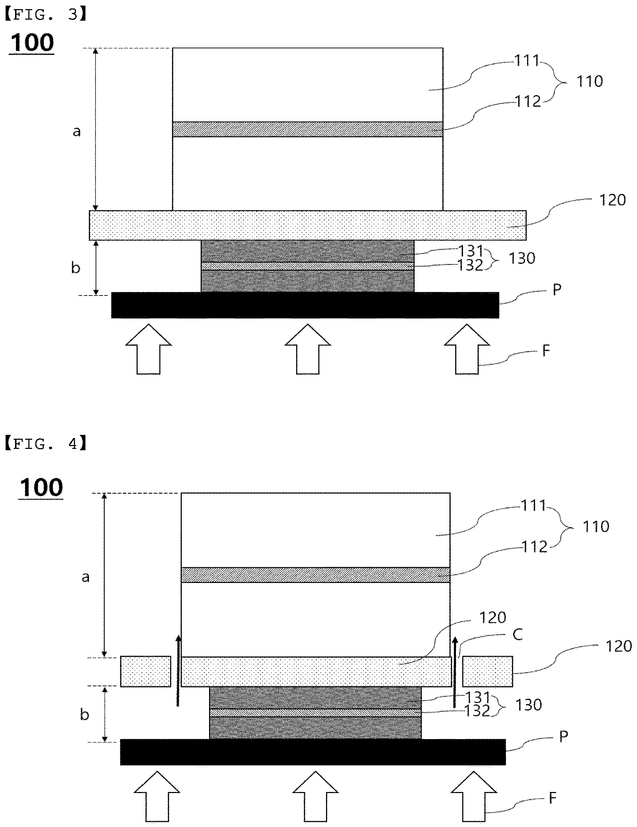

The all-solid-state battery according to the present invention will be described with reference to FIGS. 3 to 6.

FIG. 3 is a side view of an all-solid-state battery 100 according to a first type of the present invention before pressing, and FIG. 4 is a side view of the all-solid-state battery 100 according to the first type of the present invention after pressing.

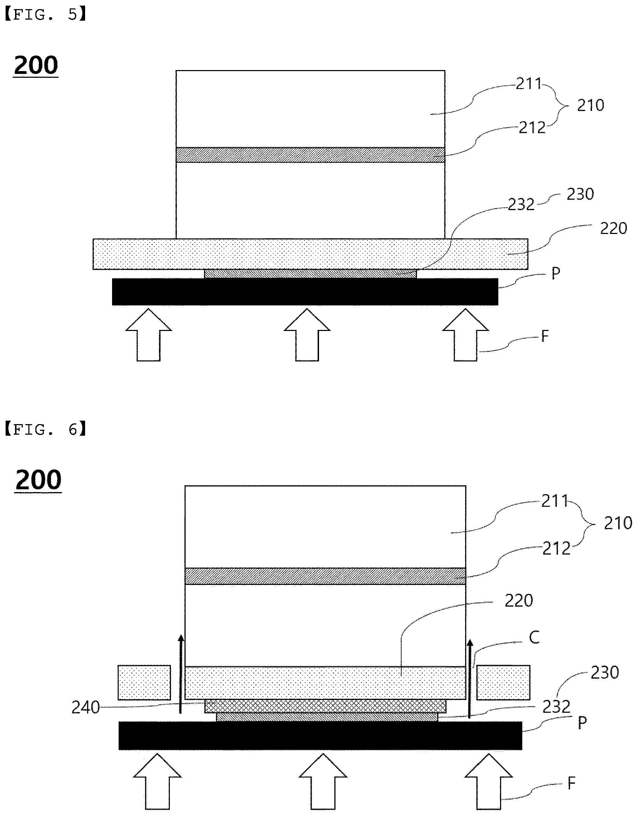

In FIGS. 3 and 4, only one positive electrode 110, one solid electrolyte layer 120, and one negative electrode 130 are shown for the convenience of description. However, an electrode assembly according to the present invention may include a plurality of positive electrodes 110, a plurality of solid electrolyte layers 120, and a plurality of negative electrodes 130, and the electrode assembly may be received in a battery case. This equally applies to FIGS. 5 and 6.

The all-solid-state battery 100 according to the first type of the present invention includes an electrode assembly, which includes a positive electrode 110 including a positive electrode active material layer 111 and a positive electrode current collector 112, a solid electrolyte layer 120, and a negative electrode 130 including a negative electrode active material layer 131 and a negative electrode current collector 132, and a battery case configured to receive the electrode assembly.

For example, the positive electrode 110 may be manufactured by applying a positive electrode mixture of a positive electrode active material constituted by positive electrode active material particles, a conductive agent, and a binder to the positive electrode current collector 112 to form the positive electrode active material layer 111. A filler may be further added to the positive electrode mixture as needed.

In general, the positive electrode current collector 112 is manufactured so as to have a thickness of 3 µm to 500 µm. The positive electrode current collector 112 is not particularly restricted as long as the positive electrode current collector exhibits high conductivity while the positive electrode current collector does not induce any chemical change in a battery to which the positive electrode current collector is applied. For example, the positive electrode current collector may be made of stainless steel, aluminum, nickel, or titanium. Alternatively, the positive electrode current collector may be made of aluminum or stainless steel, the surface of which is treated with carbon, nickel, titanium, or silver. Specifically, aluminum may be used. The current collector may have a micro-scale uneven pattern formed on the surface thereof so as to increase adhesive force of the positive electrode active material. The current collector may be configured in any of various forms, such as a film, a sheet, a foil, a net, a porous body, a foam body, and a non-woven fabric body.

In addition to the positive electrode active material particles, the positive electrode active material included in the positive electrode active material layer 111 may be constituted, for example, by a layered compound, such as lithium nickel oxide (LiNiO₂), or a compound substituted with one or more transition metals; a lithium manganese oxide represented by the chemical formula Li₁₊ₓMn₂₋ₓO₄ (where x = 0 to 0.33) or lithium manganese oxide, such as LiMnOs, LiMn₂O₃, or LiMnO₂; lithium copper oxide (Li₂CuO₂); vanadium oxide, such as LiV₃O₈, LiV₃O₄, V₂O₅, or Cu₂V₂O₇; an Ni-sited lithium nickel oxide represented by the chemical formula LiNi₁₋ₓMₓO₂ (where M = Co, Mn, Al, Cu, Fe, Mg, B, or Ga, and x = 0.01 to 0.3); a lithium manganese composite oxide represented by the chemical formula LiMn₂₋ₓMₓO₂ (where M = Co, Ni, Fe, Cr, Zn, or Ta, and x = 0.01 to 0.1) or the chemical formula Li₂Mn₃MO₈ (where M = Fe, Co, Ni, Cu, or Zn); LiMn₂O₄ in which a portion of Li in the chemical formula is replaced by alkaline earth metal ions; a disulfide compound; or Fe₂(MoO₄)₃. However, the present invention is not limited thereto.

However, it is preferable for the positive electrode active material used in the present invention to use a metal oxide including lithium or to include the same in order to deposit lithium on one surface of the negative electrode 130.

The positive electrode active material layer 111 may be thicker than the positive electrode current collector 112. As an example, the positive electrode active material layer 111 may be formed so as to have a thickness of 10 µm to 700 µm.

The conductive agent is generally added so that the conductive agent accounts for 0.1 weight% to 30 weight% based on the total weight of the compound including the positive electrode active material. The conductive agent is not particularly restricted as long as the conductive agent exhibits conductivity without inducing any chemical change in a battery to which the conductive agent is applied. For example, graphite, such as natural graphite or artificial graphite; carbon black, such as carbon black, acetylene black, Ketjen black, channel black, furnace black, lamp black, or thermal black; conductive fiber, such as carbon fiber or metallic fiber; metallic powder, such as carbon fluoride powder, aluminum powder, or nickel powder; conductive whisker, such as zinc oxide or potassium titanate; a conductive metal oxide, such as titanium oxide; or a conductive material, such as a polyphenylene derivative, may be used as the conductive agent.

The binder, which is included in the positive electrode 110, is a component assisting in binding between the active material and the conductive agent and in binding with the current collector. The binder is generally added in an amount of 0.1 to 30 weight% based on the total weight of the mixture including the positive electrode active material. As examples of the binder, there may be used polyvinylidene fluoride, polyvinyl alcohol, carboxymethylcellulose (CMC), starch, hydroxypropylcellulose, regenerated cellulose, polyvinylpyrrolidone, tetrafluoroethylene, polyethylene, polypropylene, ethylene-propylene-diene terpolymer (EPDM), sulfonated EPDM, styrene butadiene rubber, fluoro rubber, and various copolymers.

An organic solid electrolyte or an inorganic solid electrolyte may be used for the solid electrolyte layer 120. However, the present invention is not limited thereto.

For example, a polyethylene derivative, a polyethylene oxide derivative, a polypropylene oxide derivative, a phosphoric acid ester polymer, poly agitation lysine, polyester sulfide, polyvinyl alcohol, polyvinylidene fluoride, or a polymer containing an ionic dissociation group may be used as the organic solid electrolyte.

As an example, the inorganic solid electrolyte may be a sulfide-based solid electrolyte or an oxide-based solid electrolyte.

For example, a nitride or halide of Li, such as Li_{6.25}La₃Zr₂A_{10.25}O₁₂, Li₃PO₄, Li₃+xPO₄-xNₓ(LiPON), Li₃N, LiI, Li₅NI₂, Li₃N-LiI-LiOH, LiSiO₄, LiSiO₄-LiI-LiOH, Li₂SiS₃, Li₄SiO₄, or Li₄SiO₄-LiI-LiOH, may be used as the oxide-based solid electrolyte.

In the present invention, the sulfide-based solid electrolyte is not particularly restricted, and all known sulfide-based materials used in the field of lithium batteries may be employed. Products on the market may be used as the sulfide-based materials, or amorphous sulfide-based materials may be crystallized to manufacture the sulfide-based materials. For example, a crystalline sulfide-based solid electrolyte, an amorphous sulfide-based solid electrolyte, or a mixture thereof may be used as the sulfide-based solid electrolyte. There are a sulfur-halogen compound, a sulfur-germanium compound, and a sulfur-silicon compound as examples of available composite compounds. Specifically, a sulfide, such as SiS₂, GeS₂, or B₂S₃, may be included, and Li₃PO₄, halogen, or a halogen compound may be added. Preferably, a sulfide-based electrolyte capable of implementing a lithium ion conductivity of 10⁻⁴ S/cm or more is used.

Typically, Li₆PS₅Cl (LPSCl), Thio-LISICON (Li_{3.25}Ge_{0.25}P_{0.75}S₄), Li₂S-P₂S₅-LiCl, Li₂S-SiS₂, LiI-Li₂S-SiS₂, LiI-Li₂S-P₂S₅, LiI-Li₂S-P₂O₅, LiI-Li₃PO₄-P₂S₅, Li₂S-P₂S₅, Li₃PS₄, Li₇P₃S₁₁, LiI-Li₂S-B₂S₃, Li₃PO₄-Li₂S-Si₂S, Li₃PO₄-Li₂S-SiS₂, LiPO₄-Li₂S-SiS, Li₁₀GeP₂S₁₂, Li_{9.54}Si_{1.74}P_{1.44}S_{11.7}Cl_{0.3}, and Li₇P₃S₁₁ are included.

A coating layer configured to induce formation of lithium dendrites may be provided on the surface of the solid electrolyte layer 120 that faces the negative electrode 130.

The coating layer may include a metal in order to improve electrical conductivity and ionic conductivity. The kind of the metal is not limited as long as the metal enables lithium dendrites to be formed between the coating layer and the negative electrode 130 while improving performance of the negative electrode 130. At this time, the metal may be lithiophilic so as to induce lithium dendrites to be formed between the coating layer and the negative electrode 130.

At this time, the lithiophilic metal may be disposed at the surface of the coating layer that faces the negative electrode 130 such that lithium dendrites do not grow in a direction toward the solid electrolyte layer 120.

In the case in which the lithiophilic metal is located at the coating layer, lithium plating is performed on the lithiophilic metal, whereby a lithium nucleus is formed, and lithium dendrites grow from the lithium nucleus at only the coating layer.

At least one of a metal and a metal oxide may be selected as the lithiophilic material. For example, the metal may be gold (Au), silver (Ag), platinum (Pt), zinc (Zn), silicon (Si), or magnesium (Mg), and the metal oxide may be copper oxide, zinc oxide, or cobalt oxide, which is a nonmetal.

A method of forming the coating layer is not particularly restricted. For example, the coating layer may be formed by immersing, spin coating, dip coating, spray coating, doctor blade coating, solution casting, drop coating, physical vapor deposition (PVD), or chemical vapor deposition (CVD).

The negative electrode 130 according to the first type of the present invention may include a negative electrode active material layer 131 and a negative electrode current collector 132.

The negative electrode active material layer 131 may be formed by applying a negative electrode active material to at least one surface of the negative electrode current collector 132 and drying the negative electrode active material.

As the negative electrode active material used for the negative electrode active material layer 131, for example, there may be used carbon, such as a non-graphitizing carbon or a graphite-based carbon; a metal composite oxide, such as LiₓFe₂O₃ (0≤x≤1), LiₓWO₂ (0≤x≤1), SnₓMe₁₋ₓMe'_{y}O_{z} (Me: Mn, Fe, Pb, Ge; Me': Al, B, P, Si, Group 1, 2, and 3 elements of the periodic table, halogen; 0<x≤1; 1≤y≤3; 1≤z≤8); lithium metal; a lithium alloy; a silicon-based alloy; a tin-based alloy; a metal oxide, such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, or Bi₂O₅; a conductive polymer, such as polyacetylene; or a Li-Co-Ni-based material.

The negative electrode current collector 132 may generally be manufactured so as to have a thickness of 3 µm to 500 µm. The negative electrode current collector 132 is not particularly restricted as long as the negative electrode current collector exhibits conductivity while the negative electrode current collector does not induce any chemical change in a battery to which the negative electrode current collector is applied. For example, the negative electrode current collector may be made of copper, stainless steel, aluminum, nickel, titanium, or sintered carbon. Alternatively, the negative electrode current collector may be made of copper or stainless steel, the surface of which is treated with carbon, nickel, titanium, or silver, or an aluminum-cadmium alloy. In addition, the negative electrode current collector may have a micro-scale uneven pattern formed on the surface thereof so as to increase binding force of the negative electrode active material, in the same manner as the positive electrode current collector 112. The negative electrode current collector may be configured in any of various forms, such as a film, a sheet, a foil, a net, a porous body, a foam body, and a non-woven fabric body.

The battery case may be a pouch-shaped battery case. The thickness of an aluminum laminate sheet of the pouch-shaped battery case may be adjusted in order to obtain a high-capacity, high-density all-solid-state battery and to form various shapes of all-solid-state batteries. At this time, the laminate sheet may include an outer resin layer, a metal layer including an aluminum layer, and an inner sealant layer.

Since the battery case is made of a laminate sheet, as described above, it is possible to press the electrode assembly even after the electrode assembly is received in the battery case, and to reduce a possibility of the positive electrode 110, the solid electrolyte layer 120, and the negative electrode 130 of the electrode assembly reacting with an external material.

Particularly, in the case in which lithium metal is used for the negative electrode 130, there is a possibility of the lithium metal reacting with moisture. In the case in which the lithium metal is used for the negative electrode 130, therefore, it is preferable for the electrode assembly to be pressed after the electrode assembly is received in the battery case and the battery case is hermetically sealed.

The thickness a of the positive electrode may be greater than the thickness b of the negative electrode, and when the electrode assembly is pressed, the area of the electrode that directly faces a pressing portion, which is a portion configured to perform pressing, may be less than the area of the electrode that does not face the pressing portion.

At this time, the electrode that directly faces the pressing portion may be the negative electrode 130, and the electrode that does not directly face the pressing portion may be the positive electrode 110. That is, the positive electrode 110 may have a larger thickness and a larger area than the negative electrode 130.

In the case in which the thickness a of the positive electrode is large, as described above, strain of the positive electrode 110 that does not directly face the pressing portion is reduced, compared to a positive electrode 110 having a small thickness. In contrast, the negative electrode 130 that directly faces the pressing portion may be deformed by the pressing portion, since the negative electrode 130 directly faces the pressing portion; however, a flat pressing plate P, as the pressing portion, faces the negative electrode 130, and therefore the shape of the negative electrode 130 may be maintained uniform by the pressing plate P.

At this time, the thickness a of the positive electrode may be two to five times thicker than the thickness b of the negative electrode. If the thickness a of the positive electrode is too small, an all-solid-state battery having desired performance may not be obtained, and there is a high possibility of the positive electrode 110 of the electrode assembly being deformed. If the thickness a of the positive electrode is too large, the positive electrode 110 may not be efficiently operated.

Pressing the electrode assembly may entail disposing the pressing plate P at one surface of the negative electrode 130 of the electrode assembly and pushing the pressing plate P in a direction from the pressing plate P toward the negative electrode 130.

At this time, a pressing force F of higher than 50 MPa to lower than 1000 MPa may be applied to the all-solid-state battery for 1 minute or more, although the pressing force may be changed depending on the kind of the positive electrode 110, the solid electrolyte layer 120, and the negative electrode 130.

Pressing may be performed through warm isostatic pressing (WIP) or cold isostatic pressing (CIP). Warm isostatic pressing is a process of simultaneously applying isostatic pressure to the stack at high temperature in order to process the stack. In many cases, gas, such as argon, is generally used as a pressure medium. Cold isostatic pressing is a method of placing the stack in a mold having low shape resistance, such as a rubber bag, in a hermetically sealed state and applying uniform non-directional pressure to the surface of the stack using hydraulic pressure. It is preferable to use cold isostatic pressing, which has the lowest reactivity with a medium, although all isostatic pressing methods may be used for the all-solid-state battery according to the present invention.

In the case in which the electrode assembly is pressed in one direction, as described above, it is possible to prevent distortion of the electrode assembly.

Additionally, the positive electrode 110 may be made of a material that exhibits higher strength than the negative electrode 130. In the case in which the positive electrode 110 is made of a material that exhibits higher strength than the negative electrode 130, a possibility of deformation is reduced, compared to the negative electrode 130, and the shape of the positive electrode 110, which occupies the overall part of the electrode assembly, is maintained, whereby a possibility of deformation of the electrode assembly is reduced. Therefore, it is preferable for the negative electrode 130 to be made of a material other than graphite.

At this time, in the case in which the area of the positive electrode 110 is greater than the area of the negative electrode 130, the pressing force F is applied to the positive electrode 110 from the negative electrode 130 via the solid electrolyte layer 120 in the pressing direction, whereby the solid electrolyte layer 120 disposed in contact with one surface of the positive electrode 110, the area of which is relatively large, is not damaged by the pressing force F.

Even though the solid electrolyte layer 120 is damaged, a damaged portion C may be formed at the portion of the solid electrolyte layer at which the negative electrode 130 and the positive electrode 110 do not contact each other. Consequently, a possibility of short circuit occurring between the positive electrode 110 and the negative electrode 130 due to pressing described above is reduced.

Although pressing is mainly performed to reduce interfacial resistance of the electrode assembly, as described above, pressing may also be performed due to swelling of the all-solid-state battery caused as the result of use of the all-solid-state battery. At this time, the solid electrolyte layer 120 may be damaged due to contact between the electrode assembly and the battery case in the all-solid-state battery or external impact. Since the area of the positive electrode 110 is greater than the area of the negative electrode 130, however, a possibility of short circuit occurring in the electrode assembly is reduced even though the solid electrolyte layer 120 is damaged.

At this time, the area of the solid electrolyte layer 120 may be equal to the area of the positive electrode 110, or may be greater than the area of the positive electrode 110. In the case in which the area of the solid electrolyte layer 120 is equal to the area of the positive electrode 10, a possibility of the solid electrolyte layer 120 being damaged by external impact is reduced, and it is possible to reduce manufacturing cost of the all-solid-state battery. Also, in the case in which the area of the solid electrolyte layer 120 is greater than the area of the positive electrode 110, the solid electrolyte layer 120 may serve to protect one surface of the positive electrode 110. Also, in the case in which a lithium layer is formed by lithium plating/stripping, the solid electrolyte layer 120 may serve to prevent contact between the portion at which the lithium layer is formed and the positive electrode 110.

The thickness of the solid electrolyte layer 120 may be less than the thickness of the positive electrode 110. Since the solid electrolyte layer 120 faces the positive electrode 110, it is possible to prevent short circuit of the electrode assembly even though a portion of the solid electrolyte layer is damaged, and therefore it does not matter if opposite ends of the solid electrolyte layer are damaged. Consequently, the solid electrolyte layer 120 may have the minimum thickness sufficient to electrically isolate the positive electrode 110 and the negative electrode 130 from each other at the portion of the solid electrolyte layer that directly faces the positive electrode 110 and the negative electrode 130. As an example, the thickness of the solid electrolyte layer 120 may be 3 µm or more. If the solid electrolyte layer 120 is too thick, however, ionic conductivity is reduced, whereby performance of the battery is lowered. Consequently, it is preferable for the thickness of the solid electrolyte layer 120 to be small.

FIG. 5 is a side view of an all-solid-state battery 200 according to a second type of the present invention before pressing, and FIG. 6 is a side view of the all-solid-state battery 200 according to the second type of the present invention after pressing.

Hereinafter, only the difference from the first type will be mentioned.

In the all-solid-state battery 200 according to the second type of the present invention, a negative electrode current collector 232 alone without a separate negative electrode active material layer or lithium metal may be used as a negative electrode 230, unlike FIGS. 3 and 4. In the all-solid-state battery 200 according to the second type, lithium ions of a positive electrode active material layer 211 are deposited on the negative electrode 230 to form a lithium layer 240 through a lithium plating/stripping mechanism during charging and discharging. To this end, a metal oxide including lithium may be used as a positive electrode active material of the positive electrode active material layer 211.

A solid electrolyte layer 220 includes a lithiophilic metal and/or a lithiophilic metal oxide in a coating layer such that the lithium layer 240 does not grow in a direction toward the solid electrolyte layer 220.

The coating layer may have a thickness of 5 nm to 20 µm. The reason for this is that, if the coating layer is too thick, ionic conductivity of the negative electrode may be reduced, and if the coating layer is too thin, it is difficult for the coating layer to prevent damage to the solid electrolyte layer 220 due to lithium dendrites. The thickness of the coating layer may vary depending on the content of metal in the coating layer and/or whether a high molecular weight polymer having ionic conductivity is added. It is preferable for the coating layer to have a thin film thickness, since the coating layer has no or low ionic conductivity.

The lithium layer 240 is deposited on the negative electrode current collector 232. The lithium layer 240 is charged under constant current/constant voltage (CC/CV) conditions, and the thickness of the lithium layer may vary depending on the amount of lithium formed in the battery, charging and discharging speed, and charging and discharging time.

At this time, it is preferable for the area of the negative electrode 230 to be 50% to 99% of the area of a positive electrode 210. If the area of the negative electrode 230 is less than 50% of the area of the positive electrode 210, an initial short circuit occurrence rate is reduced even though the edge of the solid electrolyte layer 220 is damaged; however, a relatively large amount of lithium is nonuniformly deposited on the edge of the negative electrode current collector 232 during charging, whereby the battery may not be normally operated. If the area of the negative electrode 230 is greater than 99% of the area of the positive electrode 210, on the other hand, a damaged portion of the solid electrolyte layer 220 may come into contact with the negative electrode current collector 232, whereby initial short circuit may occur. The above-mentioned area ratio is an example, and the area ratio of the negative electrode 230 to the positive electrode 210 may vary depending on the area of each of the negative electrode 230 and the positive electrode 210. At this time, the area of each of the negative electrode 230 and the positive electrode 210 must have a minimum tolerance of 1 mm or more in width and length.

The lithium layer 240 may be formed so as to be larger than the area of the negative electrode 230. Since the area of the positive electrode 210 is greater than the area of the negative electrode 230, however, the lithium layer 240 may be smaller than the area of the positive electrode 210 or the area of the solid electrolyte layer 220.

Since the negative electrode 230 can be formed so as to have a small thickness through lithium plating/stripping, as described above, the all-solid-state battery 200 according to the second type of the present invention may have high density and high performance. At this time, the negative electrode 230 may have a thin film thickness, and the solid electrolyte layer 220 may also be formed so as to have only a thickness for minimum insulation due to the thickness difference between the positive electrode 210 and the negative electrode 230, whereby it is possible to obtain a high-density all-solid-state battery configured such that the overall thickness of the all-solid-state battery 200 is not large while the thickness of the positive electrode active material layer 211 related to capacity of the electrode is large.

In addition, since the lithium layer 240 is formed through lithium plating/stripping, as described above, formation of lithium dendrites at a non-desired portion is reduced, the solid electrolyte layer 220 may be formed so as to be thin, and a possibility of short circuit of the electrode assembly is reduced.

In order to manufacture the all-solid-state battery described above, an all-solid-state battery manufacturing method according to the present invention includes S1) a step of stacking a positive electrode, a solid electrolyte layer, and a negative electrode to form an electrode assembly and S2) a step of pressing the electrode assembly in a direction from an electrode having a small area, which is one of the positive electrode and the negative electrode, to an electrode having a large area.

As mentioned in the first type and the second type, the thickness and the area of the positive electrode may be greater than the thickness and the area of the negative electrode. At this time, the electrode assembly may be pressed in a direction from the negative electrode to the positive electrode in order to reduce interfacial resistance of the electrode assembly.

Pores in the solid electrolyte layer may be removed at the time of pressing in step S2), or may be removed before step S1). The reason for this is that it is necessary to prevent distortion or deformation of the electrode assembly due to operation of the all-solid-state battery or formation of a lithium layer.

Step S2) may be performed after the electrode assembly is received in a battery case. The reason for this is that it is necessary to use a material that sensitively reacts to an external material for the electrode assembly, as in the case in which lithium is used for the negative electrode of the electrode assembly or a sulfide-based solid electrolyte is used for the solid electrolyte layer, or to prevent damage to or deformation of the electrode assembly.

Particularly, in the case in which a material that sensitively reacts to an external material is used for the electrode assembly, it is preferable for the electrode assembly to be pressed after the electrode assembly is received in the battery case and the battery case is vacuum sealed.

Hereinafter, the present invention will be described based on Experimental Examples in which Examples according to the present invention and Comparative Examples according to the conventional art were compared with each other.

### <Example 1>

Experiments were conducted on an all-solid-state battery including a positive electrode, a solid electrolyte layer, and a negative electrode as follows.

NCM811 (LiNi_{0.8}Co_{0.1}Mn_{0.1}O₂), as a positive electrode active material, argyrodite (Li₆PS₅Cl), as a solid electrolyte, carbon, as a conductive agent, and PTFE, as a binder, were dispersed in anisole in a weight ratio of 77.5:19.5:1.5:1.5, and were stirred to manufacture a positive electrode slurry. The positive electrode slurry was applied to an aluminum current collector having a thickness of 14 µm by doctor blade coating, and was dried in a vacuum state at 100°C for 12 hours to manufacture a positive electrode having a capacity of 6 mAh/cm² and a thickness of about 150 µm.

Argyrodite (Li₆PS₅Cl), as a solid electrolyte, and PTFE, as a binder, were dispersed in anisole in a weight ratio of 95:5, and were stirred to manufacture a solid electrolyte layer slurry. The solid electrolyte layer slurry was applied to a PET release film by coating, and was dried in a vacuum state at 100°C for 12 hours to form a solid electrolyte layer.

A lithium current collector having a thickness of 50 µm was used as the negative electrode.

At this time, each of the positive electrode and the solid electrolyte layer was punched to an area of 2 cm × 2 cm, and the negative electrode was punched to an area of 1.8 cm × 1.8 cm. The positive electrode, the solid electrolyte layer, and the negative electrode are stacked in the stated order to manufacture a battery. The manufactured battery was pressed at a pressure of 500 MPa for 10 minutes through CIP in the state in which an SUS plate was located under the surface of the positive electrode.

After assembly, OCV of the battery was measured to check a short circuit occurrence rate. In addition, a 0.05C charging/0.05C discharging experiment in a voltage range of 4.25 V to 3.0 V at 60°C was conducted on the battery. The results are shown in Table 1 below.

### <Example 2>

A battery was manufactured and evaluated in the same manner as in Example 1 except that a nickel current collector (10 µm) having 30 nm of silver deposited thereon was used as a negative electrode.

### <Comparative Example 1>

A battery was manufactured and evaluated in the same manner as in Example 1 except that a positive electrode had a capacity of 4 mAh/cm² and a thickness of about 100 µm, the positive electrode was punched to an area of 1.8 cm × 1.8 cm, each of a negative electrode and a solid electrolyte layer was punched to an area of 2 cm × 2 cm, and the positive electrode, the solid electrolyte layer, and the negative electrode were assembled in order to manufacture the battery.

### <Comparative Example 2>

A battery was manufactured and evaluated in the same manner as in Comparative Example 1 except that a positive electrode, a solid electrolyte layer, and a negative electrode were prepared in order to manufacture the battery, as in Comparative Example 1, and CIP was performed in the state in which an SUS plate was disposed on the surface of the positive electrode.

### <Comparative Example 3>

A battery was manufactured and evaluated in the same manner as in Comparative Example 1 except that a positive electrode had a capacity of 6 mAh/cm².

### <Comparative Example 4>

A battery was manufactured and evaluated in the same manner as in Comparative Example 3 except that a nickel current collector (10 µm) having 30 nm of silver deposited thereon was used as a negative electrode.

### <Comparative Example 5>

A battery was manufactured and evaluated in the same manner as in Comparative Example 4 except that each of a positive electrode and a solid electrolyte layer was punched to an area of 2 cm × 2 cm, a negative electrode was punched to an area of 1 cm × 1 cm, and the positive electrode, the solid electrolyte layer, and the negative electrode were assembled in order to manufacture the battery.

### <Comparative Example 6>

A battery was manufactured and evaluated in the same manner as in Comparative Example 4 except that each of a positive electrode and a solid electrolyte layer was punched to an area of 2 cm × 2 cm, a negative electrode was punched to an area of 1.9 cm × 1.9 cm, and the positive electrode, the solid electrolyte layer, and the negative electrode were assembled in order to manufacture the battery.

**[Table 1]**

| | OCV after assembly | Occurrence of short circuit after assembly | Discharge capacity (mAh/g) |
|---|---|---|---|
| Example 1 | 2.9 | 0/3 | 195 |
| Example 2 | 0.3 to 0.4 | 0/3 | 192 |
| Comparative Example 1 | 2.9 | 1/3 | 201 |
| Comparative Example 2 | <2.3 | 3/3 | - |
| Comparative Example 3 | <2.3 | 3/3 | - |
| Comparative Example 4 | <0.2 | 3/3 | - |
| Comparative Example 5 | 0.3 to 0.4 | 0/3 | Short circuit |
| Comparative Example 6 | <0.2 | 2/3 | Short circuit |

As can be seen from Table 1 above, for a battery having a small positive electrode capacity, as in Comparative Example 1, no short circuit easily occurs after assembly. However, it can be seen that, for Comparative Example 2, in which the SUS plate is located at the positive electrode, the area of which is small, when CIP is performed, the negative electrode and the solid electrolyte layer, each of which has low strength and a large area, are deformed in a state of wrapping the positive electrode, the area of which is small, whereby short circuit occurs. That is, it can be seen that it is good for the SUS plate to face an electrode having a large area or an electrode surface having high strength.

However, in the case in which the positive electrode is manufactured so as to have a capacity of 6 mAh/cm² even though the structure in which the SUS plate faces an electrode having a large area or an electrode surface having high strength is provided, CIP pressing must be performed in order to improve contact in the all-solid-state battery.

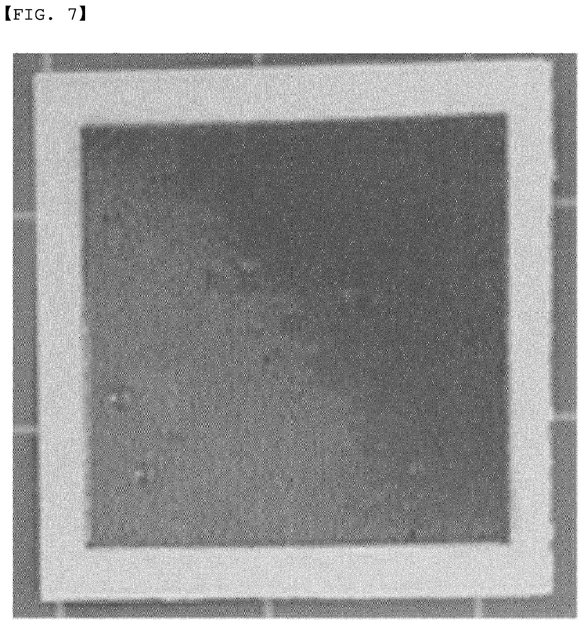

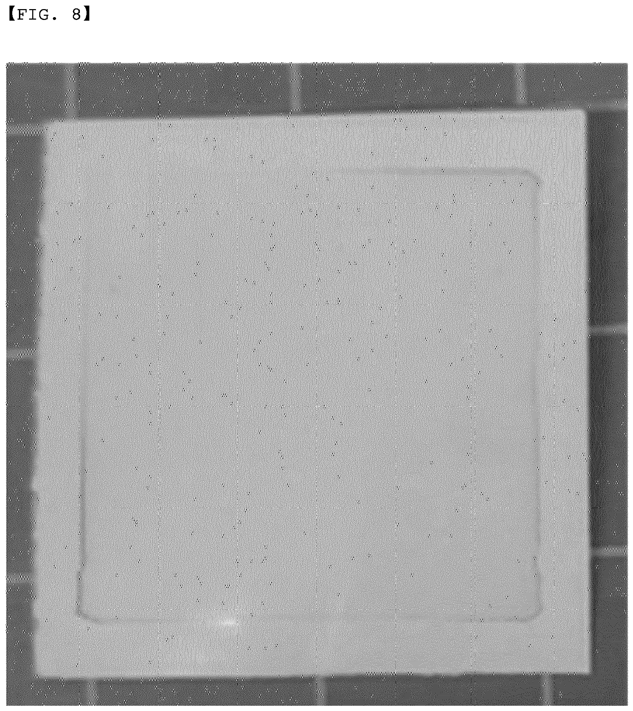

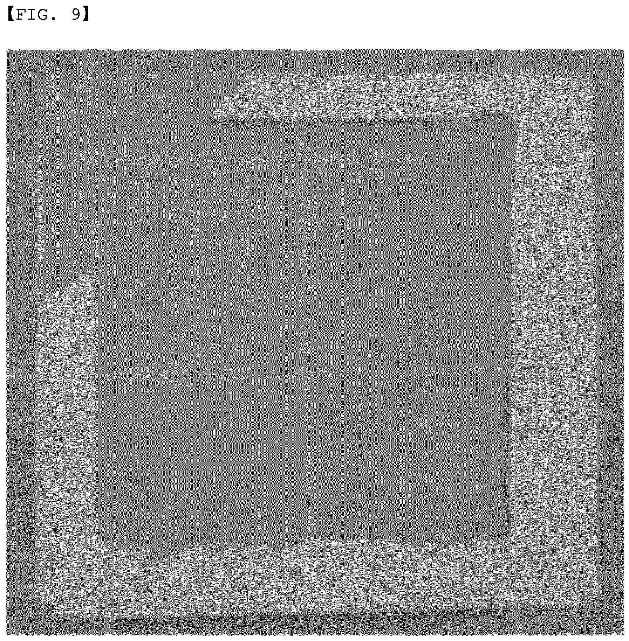

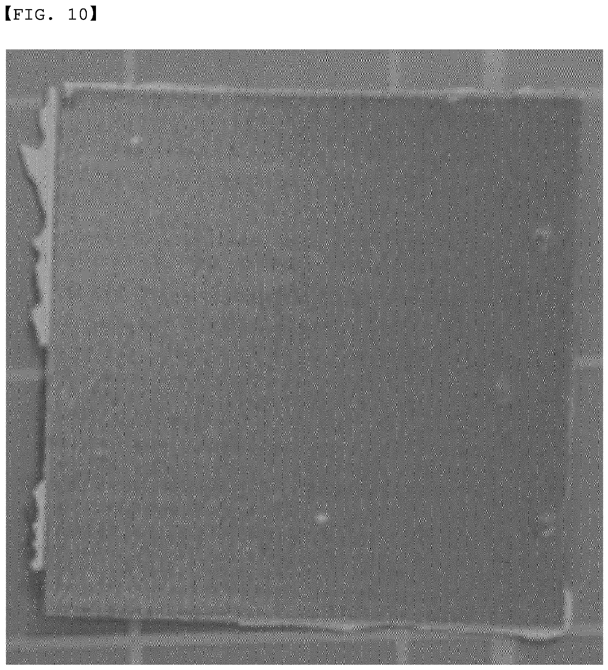

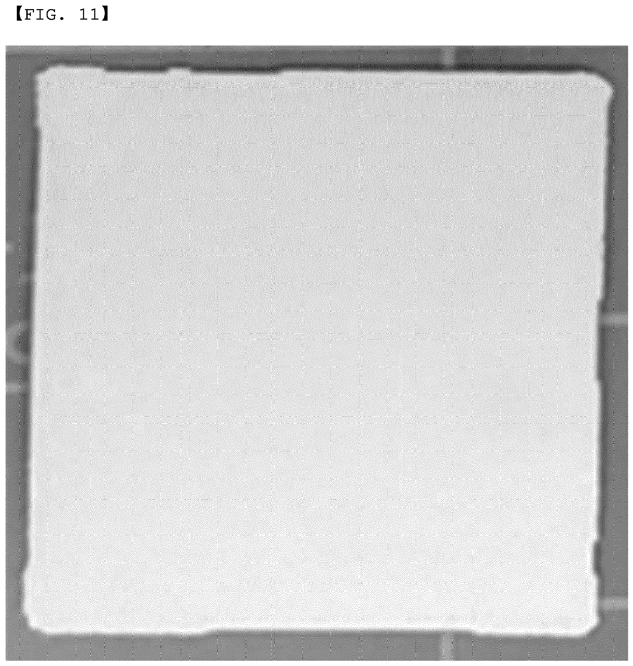

FIG. 7 is a photograph of Comparative Example 3 before CIP pressing, FIG. 8 is a photograph of the electrode assembly of Comparative Example 3 after CIP pressing, FIG. 9 is a photograph of the outer edge of the damaged solid electrolyte layer of Comparative Example 3 after CIP pressing, FIG. 10 is a photograph of the surface of the positive electrode of Comparative Example 3 after CIP pressing, and FIG. 11 is a photograph of the surface of the residual solid electrolyte layer after damage of Comparative Example 3 after CIP pressing.

As can be seen from FIGS. 7 to 11, when CIP pressing is performed, the solid electrolyte layer, which is not damaged before CIP, is broken along the area of the positive electrode. In addition, as the result of checking OCV of Comparative Example 3, the measured OCV of each of the three manufactured batteries is less than 2.3 V, which is lower than normal OCV, which is 2.9 V.

In addition, the present invention provides a battery module or a battery pack including the all-solid-state battery and a device including the battery pack. The battery module, the battery pack, and the device are well known in the art to which the present invention pertains, and thus a detailed description thereof will be omitted.

For example, the device may be a laptop computer, a netbook computer, a tablet PC, a mobile phone, an MP3 player, a wearable electronic device, a power tool, an electric vehicle (EV), a hybrid electric vehicle (HEV), a plug-in hybrid electric vehicle (PHEV), an electric bicycle (E-bike), an electric scooter (E-scooter), an electric golf cart, or an energy storage system. However, the present invention is not limited thereto.

Those skilled in the art to which the present invention pertains will appreciate that various applications and modifications are possible within the category of the present invention based on the above description.

### (Description of Reference Symbols)

1, 100, 200: All-solid-state batteries
10, 110, 210: Positive electrodes
11, 111, 211: Positive electrode active material layers
12, 112, 212: Positive electrode current collectors
20, 120, 220: Solid electrolyte layers
30, 130, 230: Negative electrodes
31, 131: Negative electrode active material layers
32, 132, 232: Negative electrode current collectors
40, 240: Lithium layers
a: Thickness of positive electrode
b: Thickness of negative electrode
P: Pressing plate
F: Pressing force
C: Damaged portion

### [Industrial Applicability]

The present invention relates to an all-solid-state battery including an electrode assembly including a positive electrode, a negative electrode, and a solid electrolyte layer disposed between the positive electrode and the negative electrode and a battery case configured to receive the electrode assembly, wherein the thickness of the positive electrode is greater than the thickness of the negative electrode, and when the electrode assembly is pressed, the area of the electrode that directly faces a pressing portion is less than the area of the electrode that does not directly face the pressing portion, and a method of manufacturing the same, and therefore the present invention has industrial applicability.

## Claims

1. An all-solid-state battery comprising:
an electrode assembly comprising a positive electrode, a negative electrode, and a solid electrolyte layer disposed between the positive electrode and the negative electrode; and
a battery case configured to receive the electrode assembly,
wherein a thickness of the positive electrode is greater than a thickness of the negative electrode, and
wherein, when the electrode assembly is pressed, an area of an electrode that directly faces a pressing portion is less than an area of an electrode that does not directly face the pressing portion.

2. The all-solid-state battery according to claim 1, wherein the electrode assembly is pressed using a method of disposing a pressing plate at one surface of the electrode assembly and pushing the pressing plate.

3. The all-solid-state battery according to claim 1, wherein
the electrode that directly faces the pressing portion is the negative electrode, and
the electrode that does not directly face the pressing portion is the positive electrode.

4. The all-solid-state battery according to claim 3, wherein the positive electrode has higher strength than the negative electrode.

5. The all-solid-state battery according to claim 1, wherein an area of the solid electrolyte layer is equal to or greater than an area of an electrode having a largest area.

6. The all-solid-state battery according to claim 1, wherein a thickness of the solid electrolyte layer is less than a thickness of the electrode that does not directly face the pressing portion.

7. The all-solid-state battery according to claim 1, wherein a thickness of the positive electrode is two to five times thicker than a thickness of the negative electrode.

8. The all-solid-state battery according to claim 1, wherein the battery case is a pouch-shaped secondary battery case.

9. The all-solid-state battery according to claim 1, wherein the all-solid-state battery is a lithium plating/stripping all-solid-state battery.

10. A method of manufacturing the all-solid-state battery according to any one of claims 1 to 9, the method comprising:
S1) stacking a positive electrode, a solid electrolyte layer, and a negative electrode to form an electrode assembly; and
S2) pressing the electrode assembly in a direction from one of the positive and negative electrodes having a smaller area than the other to said the other having a larger area.

11. The method according to claim 10, wherein pores in the solid electrolyte layer are removed in step S2) or are removed before step S1).

12. The method according to claim 10, wherein step S2) is performed after the electrode assembly is received in a battery case.

13. The method according to claim 12, wherein step S2) is performed after the electrode assembly is received in the battery case and the battery case is vacuum sealed.
